# EUROPEAN PATENT APPLICATION

(11) **EP 4 607 765 A1**
(43) Date of publication of application: **27.08.2025**
(21) Application number: 23879733.6
(22) Date of filing: 13.10.2023
(51) Int. Cl.: H02K 1/276

(54) **ROTOR FOR ROTARY ELECTRIC MACHINE**

(30) Priority: 18.10.2022 JP 2022166781
(71) Applicant: AISIN CORPORATION, Kariya-shi, Aichi 448-8650 (JP)
(72) Inventor: SHIOTSUKI Yasunobu, Kariya-shi, Aichi 448-8650 (JP); SAITO Naoto, Kariya-shi, Aichi 448-8650 (JP)
(74) Representative: TBK
(86) International application number: PCT/JP2023/037243
(87) International publication number: WO 2024/085090

(57) **Abstract**

A rotor for a rotary electric machine is disclosed which includes a rotor core, first permanent magnets in first magnet holes, and second permanent magnets in second magnet holes. Each first magnet hole has a first hole portion on the side close to the d-axis and a second hole portion on the side far from the d-axis forming a shape protruding radially inward of the core when viewed in the axial direction on one circumferential side with respect to the d-axis. The first hole portions on both circumferential sides with respect to the d-axis form a shape protruding radially outward of the core, centered on the d-axis when viewed in the axial direction. Each first permanent magnet is extended over at least part of each of the first hole portion and the second hole portion in one of the first magnet holes.

## Description

### TECHNICAL FIELD

The present disclosure relates to a rotor for a rotary electric machine.

### BACKGROUND ART

A two-layer arrangement structure is known in which a plurality of permanent magnets are arranged in two layers in a rotor core.

### CITATIONS LIST

### PATENT LITERATURE

Patent Literature 1: JP 2022-107370 A

### SUMMARY OF INVENTION

### TECHNICAL PROBLEMS

In some two-layer arrangement structures like this (also in some multi-layer arrangement structures with three or more layers), magnet holes in a radially outer layer are formed in a radially outwardly protruding shape centered on the d-axis when viewed in the axial direction, in order to cope with increased centrifugal force accompanying increased rotational speeds of rotary electric machines. However, in this configuration, this radially outwardly protruding shape results in an increased distance between each magnet hole and the outer peripheral surface of the rotor core (the width of a bridge) on the side far from the d-axis (the outer peripheral side of the rotor core), and leakage flux tends to be a problem. Against this, a possible measure is to extend each magnet hole toward the outer peripheral surface (to enlarge a flux barrier portion) to narrow the width of the bridge. However, this measure is likely to cause the volume of a void other than a permanent magnet to become relatively large.

Therefore, in one aspect, the present disclosure allows a reduction in leakage flux and an increase in the occupancy rate of permanent magnets in magnet holes while enabling a higher rotational speed of a rotary electric machine.

### SOLUTIONS TO PROBLEMS

In one aspect, a rotor for a rotary electric machine is provided which includes,
a rotor core in which first magnet holes are formed symmetrically with respect to the d-axis when viewed in an axial direction, and second magnet holes including two or more hole portions arranged successively in a circumferential direction are formed symmetrically with respect to the d-axis when viewed in the axial direction,
first permanent magnets disposed in the first magnet holes, and
second permanent magnets disposed in the second magnet holes, in which
the rotor core includes a first part located on the radially outer side of the first magnet holes and forming an outer peripheral surface of the rotor core, a second part passing between the first magnet holes and the second magnet holes, extending to the outer peripheral surface of the rotor core at both circumferential sides, and a third part passing through the radially inner side of the second magnet holes, extending to the outer peripheral surface of the rotor core at both circumferential sides,
each first magnet hole has a first hole portion on the side close to the d-axis and a second hole portion on the side far from the d-axis forming a shape protruding toward the second part when viewed in the axial direction on one circumferential side with respect to the d-axis, and the first hole portions on both circumferential sides with respect to the d-axis form a shape protruding toward the first part, centered on the d-axis when viewed in the axial direction, and
each first permanent magnet is extended over at least part of each of the first hole portion and the second hole portion in one of the first magnet holes.

### ADVANTAGEOUS EFFECTS OF INVENTION

According to the one aspect, the present disclosure allows a reduction in leakage flux and an increase in the occupancy rate of the permanent magnets in the magnet holes while enabling a higher rotational speed of the rotary electric machine.

### BRIEF DESCRIPTION OF DRAWINGS

FIG. 1 is a cross-sectional view schematically illustrating a cross-sectional structure of a motor according to an embodiment.
FIG. 2 is a cross-sectional view of a rotor.
FIG. 3 is an enlarged view of a portion related to one magnetic pole illustrated in FIG. 2.
FIG. 3A is an explanatory diagram of a (first) modification of a configuration illustrated in FIG. 3.
FIG. 3B is an explanatory diagram of a (second) modification of the configuration illustrated in FIG. 3.
FIG. 4 is a diagram illustrating lines for explaining shape features in FIG. 3.
FIG. 5 is a diagram illustrating a configuration of a first comparative example.
FIG. 6 is a diagram illustrating a configuration of a second comparative example.
FIG. 7 is an explanatory diagram of an effect of the present embodiment.

### DESCRIPTION OF EMBODIMENTS

Hereinafter, embodiments will be described in detail with reference to the accompanying drawings. Note that dimensional ratios in the drawings are merely an example, and the present invention is not limited to this. Shapes etc. in the drawings are sometimes partly exaggerated for convenience of description.

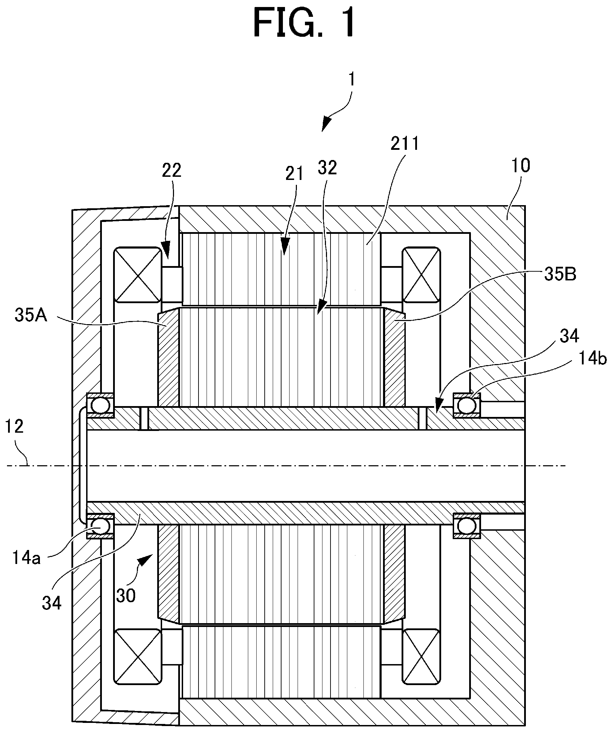

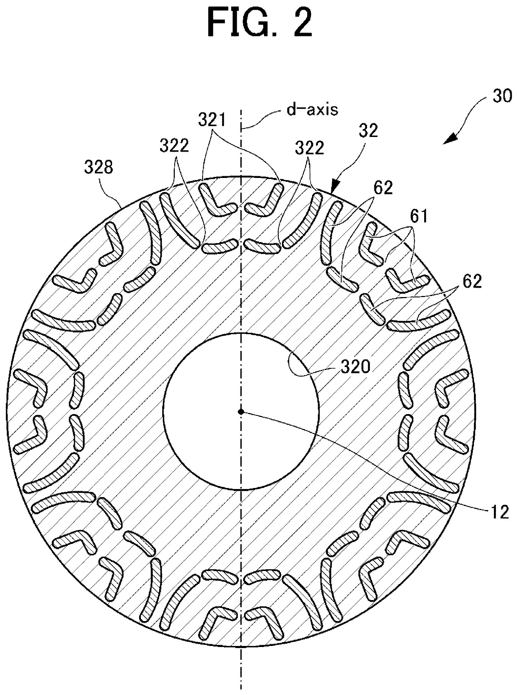

FIG. 1 is a cross-sectional view schematically illustrating a cross-sectional structure of a motor 1 according to an embodiment. FIG. 2 is a cross-sectional view of a rotor 30 (a cross-sectional view taken along a plane perpendicular to the axial direction). Note that in FIG. 2 and others, for ease of viewing, some reference numerals are each given only to one or some of a plurality of parts of the same attribute.

FIG. 1 illustrates the rotation axis 12 of the motor 1. In the following description, an axial direction refers to a direction in which the rotation axis (rotation center) 12 of the motor 1 extends, and a radial direction refers to a radial direction about the rotation axis 12. Therefore, the radially outer side refers to the side away from the rotation axis 12, and the radially inner side refers to the side toward the rotation axis 12. A circumferential direction corresponds to a rotation direction around the rotation axis 12.

The motor 1 may be, for example, a vehicle drive motor to be used in a hybrid vehicle or an electric vehicle. However, the motor 1 may be used for any other application.

The motor 1 is of an inner rotor type in which a stator 21 is provided around the radially outer side of the rotor 30. The stator 21 is fixed to a motor housing 10 on its radially outer side. The stator 21 includes a stator core 211 made, for example, from a stack of annular magnetic steel sheets. A plurality of slots (not illustrated) around which coils 22 are wound are formed in the radially inner side of the stator core 211.

The rotor 30 is disposed on the radially inner side of the stator 21.

The rotor 30 includes a rotor core 32, a rotor shaft 34, end plates 35A and 35B, and permanent magnets 61 and 62.

The rotor core 32 is fixed to the radially outer surface of the rotor shaft 34 and rotates together with the rotor shaft 34. The rotor core 32 has a shaft hole 320 (see FIG. 2). The rotor shaft 34 is fitted into the shaft hole 320. The rotor core 32 may be fixed to the rotor shaft 34 by shrink fitting, press fitting, or the like. For example, the rotor core 32 may be coupled to the rotor shaft 34 by key coupling or spline coupling. The rotor shaft 34 is rotatably supported by the motor housing 10 via bearings 14a and 14b. The rotor shaft 34 defines the rotation axis 12 of the motor 1.

The rotor core 32 is formed, for example, by a stack of annular magnetic steel sheets. The permanent magnets 61 and 62 (see FIG. 2) are embedded in the rotor core 32. Specifically, the rotor core 32 has magnet holes 321 and 322 (see FIG. 2) passing therethrough in the axial direction, and the permanent magnets 61 and 62 are inserted and fixed in the magnet holes 321 and 322. In a modification, the rotor core 32 may be formed by a green compact into which magnetic powder is compressed and compacted.

The rotor core 32 has an annular shape when viewed in the axial direction. The outer peripheral surface 328 of the rotor core 32 includes a portion having a constant outer diameter. Note that in a modification, the circular shape of the rotor core 32 does not need to be a perfect circle, and may be, for example, a circular shape partially having a notch (such as a weld groove).

As illustrated in FIG. 2, the rotor core 32 has a rotationally symmetric form about the rotation axis 12 when viewed in the axial direction. In the example illustrated in FIG. 2, the rotor core 32 has the form in which sets of the permanent magnets 61 and 62 coincide every time the rotor core 32 rotates 45 degrees about the rotation axis 12.

The plurality of permanent magnets 61 and 62 may be formed of neodymium or the like. The plurality of permanent magnets 61 and 62 may be sintered magnets or may be formed of a material for bonded magnets (hereinafter, also simply referred to as a "bonded magnet material") that is a mixture of a magnet powder and a bonding material. As illustrated in FIG. 2, as an example in the present embodiment, the plurality of permanent magnets 61 and 62 are arranged such that the permanent magnets 61 and 62 form pairs when viewed in the axial direction. In this case, a common magnetic pole is formed between a pair of the permanent magnets 61 and between a pair of the permanent magnets 62. Note that the plurality of permanent magnets 61 and 62 are arranged in such a manner that south poles and north poles alternately appear in the circumferential direction. In the present embodiment, the number of magnetic poles is eight, but the number of magnetic poles is arbitrary.

Although FIG. 1 illustrates the motor 1 having a specific structure, the structure of the motor 1 is not limited to this specific structure. For example, the rotor shaft 34 is hollow in FIG. 1, but may be solid.

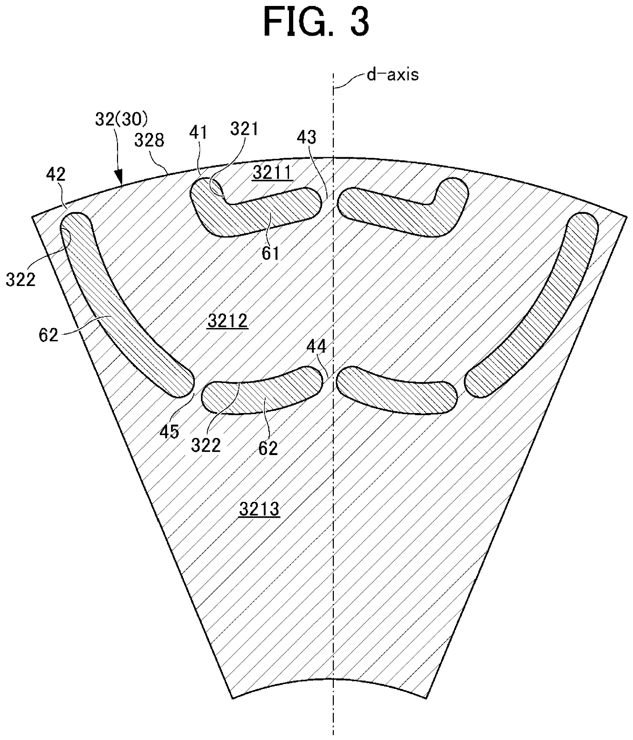

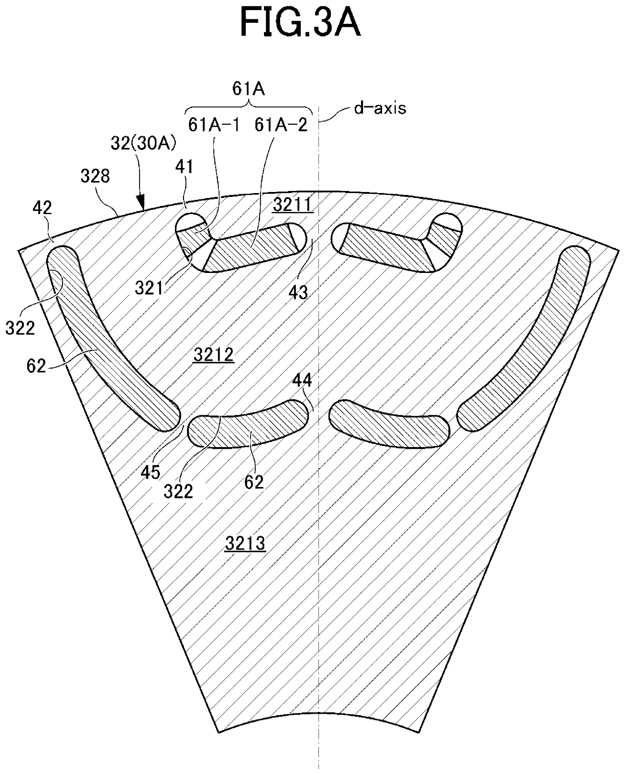

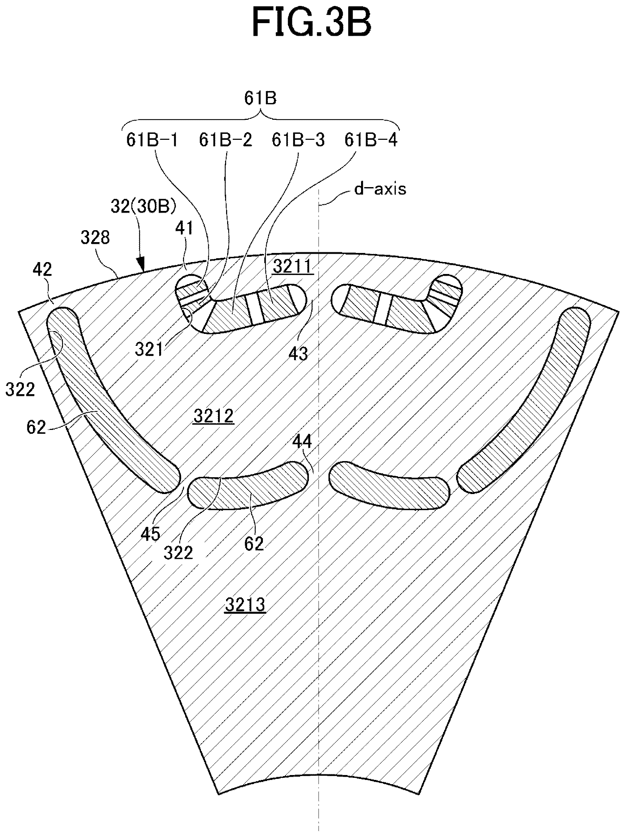

Next, with reference to FIG. 3 and subsequent drawings, the rotor core 32 and the permanent magnets 61 and 62 will be described in more detail. The following describes a configuration related to one magnetic pole. Configurations related to the other magnetic poles may be the same.

FIG. 3 is an enlarged view of a portion related to one magnetic pole illustrated in FIG. 2. The configuration related to one magnetic pole is basically symmetric with respect to the d-axis corresponding to the main flux direction (the direction of the field pole). Hereinafter, the side far from the d-axis refers to the side away from the d-axis, and the side close to the d-axis refers to the side approaching the d-axis. Both circumferential sides of the d-axis refer to both circumferential sides across the d-axis, and both circumferential sides with respect to the d-axis with the d-axis in the center.

In the rotor core 32, the magnet holes 321 on the radially outer side (hereinafter, referred to as "first magnet holes 321") and the magnet holes 322 on the radially inner side (hereinafter, referred to as "second magnet holes 322") are formed.

The first magnet holes 321 are formed on both circumferential sides of the d-axis with two hole portions forming a pair. However, in a modification, the first magnet holes 321 may include a hole portion on the d-axis and hole portions separated on both circumferential sides of the d-axis, separately. Alternatively, the first magnet holes 321 may be formed by a set of a large number of small hole portions. In this case, the form of the first magnet holes 321 corresponds to the overall form or arrangement of the set of the large number of small hole portions. The permanent magnets 61 are provided in the hole portions of the first magnet holes 321. Alternatively, a plurality of permanent magnets 61 may be disposed in one hole portion of each first magnet hole 321. For example, as in a rotor 30A illustrated in FIG. 3A, two permanent magnets 61A may be disposed in one hole portion of each first magnet hole 321. Alternatively, as in a rotor 30B illustrated in FIG. 3B, four permanent magnets 61B may be disposed in one hole portion of each first magnet hole 321. In either case, in one hole portion of each first magnet hole 321, the plurality of permanent magnets 61A or 61B may be spaced from each other as illustrated in the drawings, or may be disposed in contact with each other unlike in the drawings. Furthermore, as in the rotor 30A illustrated in FIG. 3A or the rotor 30B illustrated in FIG. 3B, the plurality of permanent magnets 61A or 61B in one hole portion of each first magnet hole 321 may not be extended to both circumferential ends of the one hole portion, and non-magnet portions (for example, hollow portions) may be formed at both circumferential ends of the one hole portion. Alternatively, unlike in the drawings, in one hole portion of each first magnet hole 321, the plurality of permanent magnets 61A or 61B may be extended to both circumferential ends of the one hole portion.

The second magnet holes 322 are provided on the radially inner side of the first magnet holes 321. Like the first magnet holes 321, the second magnet holes 322 are formed in a pair symmetrically with respect to the d-axis. The second magnet holes 322 on both sides of the d-axis in the circumferential direction have a wider circumferential extension range than the first magnet holes 321 on both sides of the d-axis in the circumferential direction.

In the present embodiment, the second magnet holes 322 include a total of four hole portions formed on both circumferential sides of the d-axis in pairs. Specifically, the second magnet holes 322 include two hole portions formed on one side of the d-axis in the circumferential direction, and two hole portions formed on the other side of the d-axis in the circumferential direction. In this way, in the present embodiment, a total of four hole portions for each magnetic pole form the second magnet holes 322. However, in a modification, the second magnet holes 322 may include a hole portion on the d-axis and two hole portions located on both circumferential sides of the d-axis in a pair. Alternatively, the second magnet holes 322 may be formed by a set of a larger number of small hole portions. In either case, the form of the second magnet holes 322 corresponds to the overall form or arrangement of the set of the plurality of hole portions. The permanent magnets 62 are provided in the hole portions of the second magnet holes 322. At this time, gaps may be provided between the second magnet holes 322 and the permanent magnets 62 at both longitudinal ends of the permanent magnets 62. The gaps may be cavities or may be filled with resin or the like. Alternatively, a plurality of permanent magnets 62 may be disposed in one hole portion of each second magnet hole 322.

By including the first magnet holes 321 and the second magnet holes 322 like this, the rotor core 32 includes three parts 3211, 3212, and 3213 (hereinafter, also referred to as a first part 3211, a second part 3212, and a third part 3213) radially connected only via bridges.

Specifically, the first part 3211 extends radially outward from the first magnet holes 321. The first part 3211 forms part of the outer peripheral surface 328 of the rotor core 32.

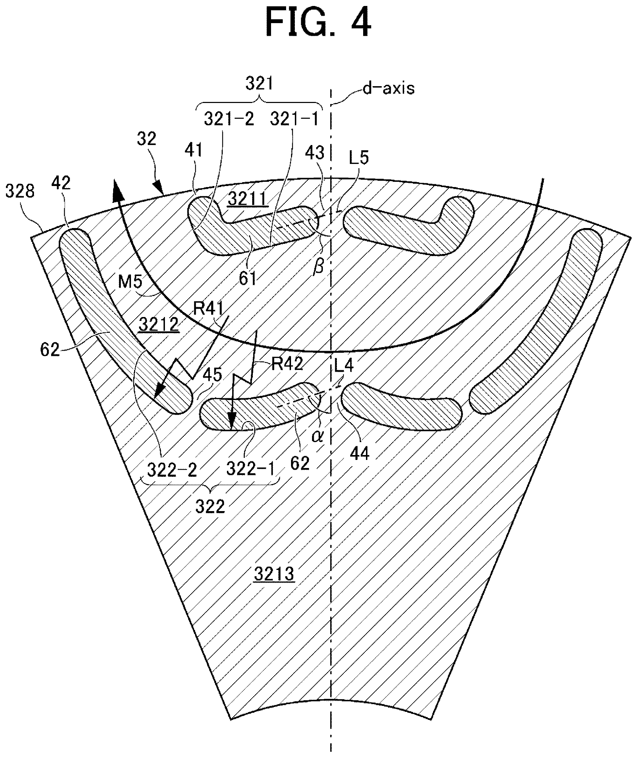

The second part 3212 passes between the second magnet holes 322 and the first magnet holes 321, extending to the outer peripheral surface 328 of the rotor core 32 at its both circumferential sides. The second part 3212 forms part of the outer peripheral surface 328 of the rotor core 32 on both circumferential sides of the first part 3211. The second part 3212 forms the magnetic path of the q-axis flux. Specifically, the q-axis flux flows through the space between the second magnet holes 322 and the first magnet holes 321 from one end to the other end of the second part 3212 (see an arrow M5 schematically shown in FIG. 4).

The third part 3213 passes through the radially inner side of the second magnet holes 322, extending to the outer peripheral surface 328 of the rotor core 32 at its both circumferential sides. The third part 3213 forms part of the outer peripheral surface 328 of the rotor core 32 on both circumferential sides of the second part 3212.

In the present embodiment, the mass of the third part 3213 is significantly greater than the mass of the second part 3212, and the mass of the second part 3212 is significantly greater than the mass of the first part 3211.

By including these three parts 3211, 3212, and 3213, the rotor core 32 includes a plurality of bridges 41, 42, 43, 44, and 45 connecting the three parts 3211, 3212, and 3213.

The bridges 41 (hereinafter, referred to as "first bridges 41") support the first part 3211 on the radially outer side against the second part 3212. That is, the first bridges 41 connect the second part 3212 and the first part 3211 and extend in the circumferential direction. The first bridges 41 are provided in a pair on both circumferential sides of the first part 3211.

The bridges 42 (hereinafter, referred to as "second bridges 42") support the second part 3212 on the radially outer side against the third part 3213. That is, the second bridges 42 connect the third part 3213 and the second part 3212 and extend in the circumferential direction. The second bridges 42 are provided in a pair on both circumferential sides of the second part 3212.

The bridge 43 supports the first part 3211 against the second part 3212 on the radially inner side of the first bridges 41.

The bridge 44 (hereinafter, referred to as a "center bridge 44") supports the second part 3212 against the third part 3213 on the d-axis.

The bridges 45 (hereinafter, referred to as "intermediate bridges 45") support the second part 3212 against the third part 3213 on the radially outer side of the center bridge 44 (the side far from the d-axis) and on the radially inner side of the second bridges 42.

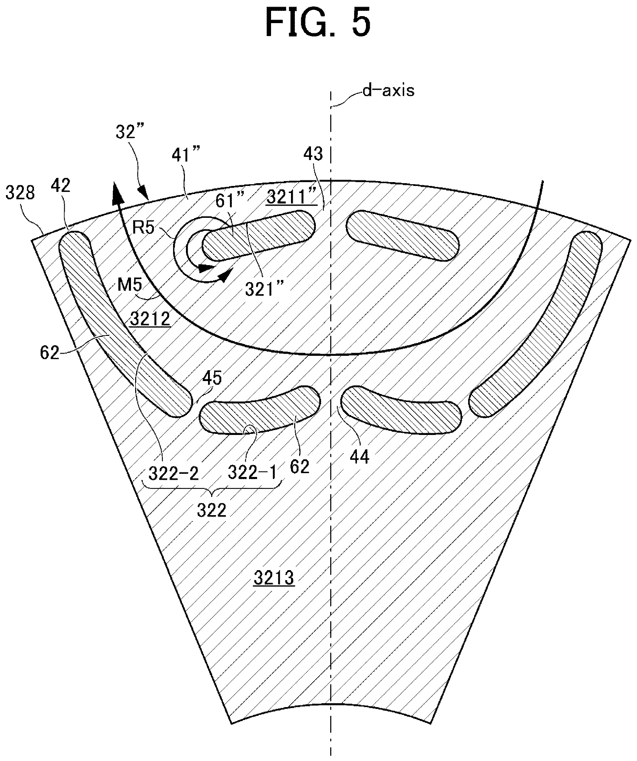

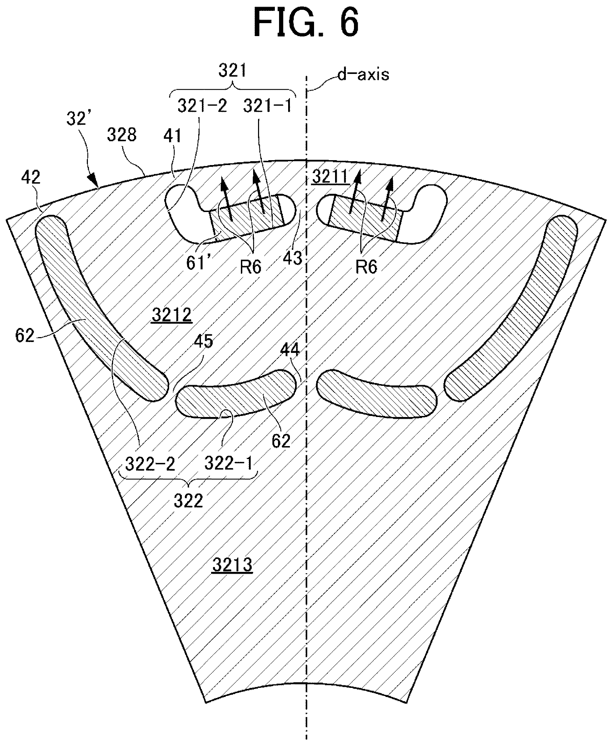

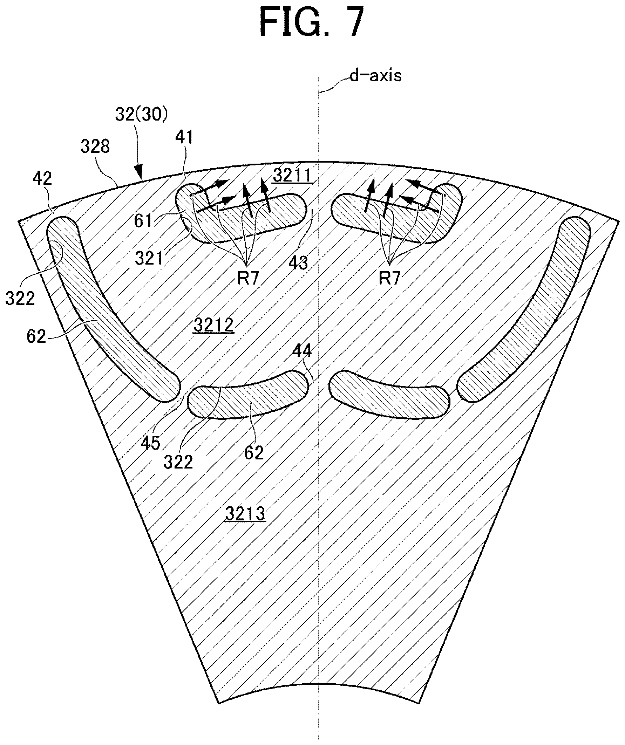

Next, with reference to FIG. 4 and subsequent drawings, further characteristic configurations of the present embodiment will be described. FIG. 4 is a diagram illustrating lines for explaining shape features in FIG. 3. FIG. 5 is a diagram illustrating a configuration of a first comparative example. FIG. 6 is a diagram illustrating a configuration of a second comparative example. FIG. 7 is a diagram for explaining some of the effects of the present embodiment in comparison with the first comparative example and the second comparative example. In FIGS. 5 to 7, the flows of magnetic flux (magnetic flux due to the magnetic pole) are schematically indicated by R5 to R7, respectively.

In the following description, various arrangements and forms represent arrangements and forms when viewed in the axial direction unless otherwise specified.

In the present embodiment, the first magnet holes 321 form a W shape centered on the d-axis. Specifically, the first magnet holes 321 have hole portions 321-1 (hereinafter, also referred to as "first hole portions 321-1") on the side close to the d-axis which form a radially outwardly protruding shape centered on the d-axis, and hole portions 321-2 (hereinafter, also referred to as "second hole portions 321-2") on the side far from the d-axis, each of which forms a radially inwardly protruding shape in combination with the first hole portion 321-1 on one side of the d-axis.

The present embodiment, in which the first magnet holes 321 have the W-shaped form, thus can efficiently reduce the mass of the first part 3211 as compared with cases where they do not. This can effectively reduce stresses in the bridges 41 and 43 due to centrifugal force.

In the case where the first hole portions 321-1 of the first magnet holes 321 form the radially outwardly protruding shape centered on the d-axis, as illustrated in FIG. 4, the angle β formed by the shape center line L5 of the portion on the side close to the d-axis and the d-axis is an acute angle on the radially inner side.

In the present embodiment, each permanent magnet 61 is disposed in both the first hole portion 321-1 and the second hole portion 321-2 of one of the first magnet holes 321. In this case, each permanent magnet 61 may be disposed in part of each of the first hole portion 321-1 and the second hole portion 321-2, or may be disposed in the entirety of one of the first hole portion 321-1 and the second hole portion 321-2 and disposed in part of the other. In the present embodiment, as an example, each permanent magnet 61 is disposed in the entirety of each of the first hole portion 321-1 and the second hole portion 321-2 as illustrated in FIG. 4.

In this case, the permanent magnets 61 may be formed of a bonded magnet material. In the case where the permanent magnets 61 are formed of a bonded magnet material, the permanent magnets 61 may fill (be disposed in) the first magnet holes 321 without gaps. Alternatively, each permanent magnet 61 may be formed by a combination of a magnet portion made of a bonded magnet material and a sintered magnet. In this case, the sintered magnet may be disposed in the first hole portion 321-1 in a relatively rectangular shape, and the magnet portion of the bonded magnet material may be disposed in the second hole portion 321-2 that may be in a relatively complex shape. In other words, by using a bonded magnet material, each permanent magnet 61 can also be formed in a space used as a flux barrier (especially a space of a shape that makes it difficult to insert a sintered magnet when viewed in the axial direction).

This disposition of each permanent magnet 61 makes the portion of the permanent magnet 61 disposed in the second hole portion 321-2 have a shorter distance (radial distance or shortest distance) to the outer peripheral surface 328 of the rotor core 32 than the portion disposed in the first hole portion 321-1. This allows the occupancy rate of the permanent magnets 61 in the first magnet holes 321 to be increased while minimizing leakage flux through the first bridges 41 as will be described below.

In the present embodiment, the second magnet holes 322 form a W shape centered on the d-axis. Specifically, the second magnet holes 322 include portions on the side close to the d-axis forming a radially outwardly protruding shape centered on the d-axis, and portions on the side far from the d-axis forming a radially inwardly protruding shape in combination with the portions on the side close to the d-axis. In the present embodiment, the portions on the side close to the d-axis correspond to the hole portions 322-1 on both circumferential sides across the center bridge 44, and the portions on the side far from the d-axis correspond to the hole portions 322-2 on both circumferential sides across the intermediate bridges 45.

In the case where the portions of the second magnet holes 322 on the side close to the d-axis form the radially outwardly protruding shape centered on the d-axis, as illustrated in FIG. 4, the angle α formed by the shape center line L4 of the portion on the side close to the d-axis and the d-axis is an acute angle on the radially inner side. In the case where the portion of each second magnet hole 322 on the side close to the d-axis is in an arc shape as illustrated in FIG. 4, the shape center line L4 may be tangential at the d-axis-side end (the end on the side close to the d-axis) of the arc.

In the present embodiment, each permanent magnet 62 may be disposed in the entirety of one of the second magnet holes 322 or in part of one of the second magnet holes 322.

In the present embodiment, as illustrated in FIG. 4, the radially inwardly protruding shape of the second magnet holes 322 has curves (see R41 and R42) each having the center of curvature on the d-axis side (radially outer side). In the example illustrated in FIG. 4, the second magnet holes 322 have the curves (see R41 and R42) on both sides across each intermediate bridge 45, but only one of the two may have the curve (R41 or R42). Each second magnet hole 322 does not need to have a curve in its entirety and, for example, may have a curve only at a portion close to the intermediate bridge 45. The curvature radius of each curve may be constant or may change within the curve.

The radially inwardly protruding shape of each first magnet hole 321 may similarly have a curve having the center of curvature on the d-axis side (radially outer side).

The present embodiment, in which the first magnet holes 321 and the second magnet holes 322 have the W-shaped forms, thus can efficiently reduce the masses of the first part 3211 and the second part 3212. This can effectively reduce stresses in the bridges (bridges 41, 42, 43, 44, and 45) due to centrifugal force.

Here, a rotor 32" of the first comparative example illustrated in FIG. 5 is different from that of the present embodiment in that the first magnet holes 321 are replaced with first magnet holes 321". The first magnet holes 321" are different from the first magnet holes 321 according to the present embodiment in that they do not include portions corresponding to the second hole portions 321-2. Permanent magnets 61" have a shape corresponding to that of the first magnet holes 321". In this case, a first part 3211" is supported by relatively large bridges 41". As schematically indicated by arrows R5 in FIG. 5, there is a problem that leakage flux through the bridges 41" is significantly large.

A rotor 32' of the second comparative example illustrated in FIG. 6 is different from that of the present embodiment in that the permanent magnets 61 are replaced with permanent magnets 61'. The permanent magnets 61' are different from the permanent magnets 61 according to the present embodiment in that they are not disposed in the second hole portions 321-2. That is, in the second comparative example, the second hole portions 321-2 function as flux barriers. In the second comparative example like this, each first magnet hole 321 tends to have a relatively large volume of voids other than the permanent magnet 61'.

In contrast, the present embodiment, in which the permanent magnets 61 are provided throughout the first magnet holes 321 in the W shape as described above, thus can reduce leakage flux and increase the occupancy rate of the permanent magnets 61 in the magnet holes 321. That is, in the present embodiment, the magnet holes 321 are also extended to portions where relatively large leakage flux is produced in the first comparative example, so that leakage flux can be reduced. Further, in the present embodiment, the permanent magnets 61 are also extended to the voids used as flux barriers in the second comparative example, so that the occupancy rate of the permanent magnets 61 in the magnet holes 321 can be increased. Consequently, in the present embodiment, as schematically indicated by arrows R7 in FIG. 7, magnetic flux associated with the permanent magnets 61 can be increased as compared with that in the case of the second comparative example schematically indicated by arrows R6 in FIG. 6, and the torque characteristics of the motor 1 can be enhanced.

In particular, according to the present embodiment, the permanent magnets 61 are extended throughout the voids used as flux barriers (that is, throughout the second hole portions 321-2), so that magnetic flux associated with the permanent magnets 61 can be maximized.

Although the embodiments have been described in detail above, the present invention is not limited to specific embodiments, and various modifications and changes can be made within the scope described in the claims. All or a plurality of the components of the above-described embodiment can be combined.

For example, in the first embodiment described above (also in the other embodiments), the first magnet holes 321 include two or more hole portions arranged symmetrically with respect to the d-axis when viewed in the axial direction and successively in the circumferential direction, but the first magnet holes 321 may be formed by a single hole portion.

### REFERENCE SIGNS LIST

30: Rotor (rotor for rotary electric machine), 32: Rotor core, 3211: First part, 3212: Second part, 3213: Third part, 321: First magnet hole, 321-1: First hole portion, 321-2: Second hole portion, 322: Second magnet hole, 61: Permanent magnet (first permanent magnet), and 62: Permanent magnet (second permanent magnet)

## Claims

1. A rotor for a rotary electric machine comprising:
a rotor core in which first magnet holes are formed symmetrically with respect to a d-axis when viewed in an axial direction, and second magnet holes including two or more hole portions arranged successively in a circumferential direction are formed symmetrically with respect to the d-axis when viewed in the axial direction;
first permanent magnets disposed in the first magnet holes; and
second permanent magnets disposed in the second magnet holes, wherein
the rotor core includes a first part located on a radially outer side of the first magnet holes and forming an outer peripheral surface of the rotor core, a second part passing between the first magnet holes and the second magnet holes, extending to the outer peripheral surface of the rotor core at both circumferential sides, and a third part passing through a radially inner side of the second magnet holes, extending to the outer peripheral surface of the rotor core at both circumferential sides,
each first magnet hole has a first hole portion on a side close to the d-axis and a second hole portion on a side far from the d-axis forming a shape protruding toward the second part when viewed in the axial direction on one circumferential side with respect to the d-axis, and the first hole portions on both circumferential sides with respect to the d-axis form a shape protruding toward the first part, centered on the d-axis when viewed in the axial direction, and
each first permanent magnet is extended over at least part of each of the first hole portion and the second hole portion in one of the first magnet holes.

2. The rotor for a rotary electric machine according to claim 1, wherein
the first hole portion is continuous with the second hole portion, and
each first permanent magnet is extended throughout the second hole portion.

3. The rotor for a rotary electric machine according to claim 1, wherein a magnet portion of each first permanent magnet in the second hole portion has a shorter distance to the outer peripheral surface of the rotor core than a magnet portion of the first permanent magnet in the first hole portion when viewed in the axial direction.

4. The rotor for a rotary electric machine according to any one of claims 1 to 3, wherein the second magnet holes include portions or a portion extended on both circumferential sides with respect to the d-axis across the d-axis or through the d-axis, forming a shape protruding toward the second part, centered on the d-axis when viewed in the axial direction.

5. The rotor for a rotary electric machine according to claim 4, wherein a magnet portion of each first permanent magnet extended at least in the second hole portion is formed of a bonded magnet material.
